# EUROPÄISCHE PATENTSCHRIFT

(11) **EP 3 166 808 B1**
(45) Veröffentlichungstag und Bekanntmachung des Hinweises auf die Patenterteilung: **17.10.2018**
(21) Anmeldenummer: 15730715.8
(22) Anmeldetag: 09.06.2015
(51) Int. Cl.: B60G 21/055, H02K 5/22

(54) **ELEKTROMECHANISCHER STELLANTRIEB**
ELECTROMECHANICAL ACTUATING DRIVE
MÉCANISME DE COMMANDE ÉLECTROMÉCANIQUE

(30) Priorität: 09.07.2014 DE 102014213323
(43) Veröffentlichungstag der Anmeldung: 17.05.2017
(73) Patentinhaber: ZF Friedrichshafen AG, 88046 Friedrichshafen (DE)
(72) Erfinder: PFEIFFER, Daniel, 88276 Berg (DE); HOFFMANN, Martin, 88048 Friedrichshafen (DE)
(86) Internationale Anmeldenummer: PCT/EP2015/062800
(87) Internationale Veröffentlichungsnummer: WO 2016/005127

(56) Entgegenhaltungen:
- DE-A1-102012 110 656
- DE-A1-102013 215 859

## Beschreibung

Die Erfindung betrifft einen elektromechanischen Stellantrieb, umfassend einen um seine Längsachse drehbeweglich in einem Fahrzeug anordenbaren Stellmotor (Aktuator) und einen ein erstes und ein zweites Ende aufweisenden Kabelstrang, welcher an seinem ersten Ende am Stellmotor angeschlossen, sich in einem biegeelastisch verformbaren Bogen von seinem ersten bis zu seinem zweiten Ende erstreckt und am seinem zweiten Ende ortsfest im Fahrzeug fixierbar und umgelenkt ist.

In der nachveröffentlichten Offenlegungsschrift der Anmelderin mit der Nummer DE 10 2012 110 656 A ist ein elektromechanischer Stellantrieb für eine aktive Wankstabilisierung eines Fahrzeuges offenbart. Der Stellantrieb umfasst einen als Elektromotor mit Planetengetriebe ausgebildeten Stellmotor, auch Aktuator genannt, an welchen stirnseitig ein Kabelstrang, bestehend aus Leistungskabeln und einem Signal- oder Sensorkabel, angeschlossen ist. Der Kabelstrang weist ein erstes Ende auf, welches über einen ersten Anschluss bzw. ersten Stecker mit dem Aktuator verbunden ist, und erstreckt sich vom ersten Anschluss bogenförmig um die Längsachse des Aktuators bis zu seinem zweiten Ende, welches als zweiter Stecker ausgebildet und fahrzeugseitig fixiert ist. Der Aktuator und damit das erste Ende des Kabelstranges führt bei aktiver Wankstabilisierung eine Dreh- oder Schwenkbewegung um die Längsachse aus, während das zweite Ende des Kabelstranges ortsfest angeordnet ist. Dadurch ergibt sich das so genannte Kabelatmen, d. h. eine Veränderung der Krümmung des Kabelstranges zwischen beiden Enden.

Aus DE 10 2012 110 656 A1 ist ein elektromechanischer Stellantrieb eines Fahrwerkstabilisators bekannt. Dieser umfasst einen um seine Längsache drehbeweglich in einem Fahrzeug angeordneten Stellmotor und einen ein erstes und ein zweites Ende aufweisenden Kabelstrang, der an seinem ersten Ende am Stellmotor angeschlossen, sich in einem biegeelastisch verformbaren Bogen wendelförmig von seinem ersten bis zu seinem zweiten Ende erstreckt und an seinem zweiten Ende ortsfest im Fahrzeug fixiert ist. Das zweite Ende des Kabelstrangs ist in einer als Durchführöffnung im Stabilisatorlager ausgeführten Fixier- und Umlenkvorrichtung eingespannt.

Ausgehend von dem genannten Stand der Technik bezweckt die Erfindung eine weitere Verbesserung der Führung des Kabelstranges.

Gelöst wird die Aufgabe durch einen elektromechanischen Stellantrieb, insbesondere für eine elektromechanische Wankstabilisierung für ein Kraftfahrzeug, vorzugsweise durch eine Wankstabilisierung für ein Kraftfahrzeug mit einem elektromechanischem Stellantrieb, mit einem um seine Längsachse drehbeweglich in einem Fahrzeug anordenbaren Stellmotor, der innerhalb des Gehäuses des Stellantriebs wirkt, und einen ein erstes und ein zweites Ende aufweisenden Kabelstrang, welcher an seinem ersten Ende am Stellmotor angeschlossen, sich in einem biegeelastisch verformbaren Bogen von seinem ersten bis zu seinem zweiten Ende erstreckt und an seinem zweiten Ende ortsfest im Fahrzeug fixierbar ist, wobei das zweite Ende des Kabelstranges in einer Fixier- und Umlenkvorrichtung eingespannt ist, wobei die Fixier- und Umlenkvorrichtung ein erstes und ein zweites Einlegeteil umfasst.

Nach der Erfindung ist das zweite Ende des Kabelstranges in eine Fixier- und Umlenkvorrichtung eingelegt und eingespannt. Durch die Fixier- und Umlenkvorrichtung wird der "dynamische" Teil des Kabelstranges, d. h. der sich bewegende oder atmende Teil an einen ortsfesten Punkt im Fahrzeug übergeben und von dort als "statischer" Kabelstrang weitergeführt, beispielsweise zu einer im Fahrzeug angeordneten elektronischen Steuereinrichtung. Mit der Fixier- und Umlenkvorrichtung wird erreicht, dass unkontrollierte Bewegungen der Kabel untereinander, z.B. ein Scheuern vermieden werden. Die Fixier- und Umlenkvorrichtung sorgt ferner dafür, dass die Umlenkung kontrolliert, d. h. mit einem Biegeradius erfolgt, welcher unschädlich für die Kabel ist. Ein erfindungsgemäß vorgesehenes erstes und zweites Einlegeteil dient der Fixierung und/oder Umlenkung der einzelnen Kabel dienen. Dabei werden die Kabel zwischen den Einlegeteilen verlegt und eingespannt.

Vorzugsweise sind die Einlegeteile aus Kunststoff hergestellt und symmetrisch ausgebildet.

Nach einer weiteren bevorzugten Ausführungsform weist die Vorrichtung ein Klemm- und Halteblech zur Aufnahme der beiden Einlegeteile auf. Das Klemm- und Halteblech umschließt somit beide Einlegeteile und die zwischen den Einlegeteilen angeordneten Kabel und bewirkt eine gegenseitige Verspannung.

Nach einer weiteren bevorzugten Ausführungsform weist das Klemm- und Halteblech Befestigungsmittel zur fahrzeugseitigen Fixierung auf. Bevorzugt sind die Befestigungsmittel als Laschen mit Durchbrüchen ausgebildet. Damit kann die gesamte Fixier- und Umlenkvorrichtung an einem frei im Fahrzeug wählbaren Ort befestigt werden. Die Befestigung erfolgt bevorzugt durch lösbare Befestigungsmittel, z. B. Befestigungsschrauben, sodass auch eine Demontage der Vorrichtung möglich ist mit der Option auf eine Nachjustierung. Dies kann insbesondere für die freie Kabellänge zwischen dem ersten aktuatorseitigen Ende und dem zweiten ortfesten Ende des Kabelstranges vorteilhaft sein, wenn sich Defizite oder Mängel nach der ersten Montage zeigen.

Nach einer weiteren bevorzugten Ausführungsform umfasst der Kabelstrang mehrere Kabel, welche zu einem Kabelstrang zusammengefasst sind. In der Fixier- und Umlenkvorrichtung werden die Kabel jedoch einzeln zwischen den beiden Einlegeteilen positioniert. Bevorzugt weisen die Einlegeteile hierzu Führungsrillen oder Führungskonturen auf, welche eine genaue Führung und Positionierung der einzelnen Kabel ermöglichen.

Nach einer weiteren bevorzugten Ausführungsform weist die Fixier- und Umlenkvorrichtung eine Zugangsseite und zwei sich gegenüber liegende Abgangsseiten für die Kabel auf. Ab der Zugangsseite werden die Kabel zugeführt, und auf der Abgangsseite verlassen die Kabel die Vorrichtung, wobei entweder eine gerade Durchführung der Kabel durch die Vorrichtung, d. h. ohne Richtungswechsel möglich ist, oder eine Umlenkung, welche etwa 90 Grad, vorzugsweise genau 90 Grad, betragen kann. Bei der geraden Durchführung der Kabel liegt die Zugangsseite der Abgangsseite gegenüber.

Nach einer weiteren bevorzugten Ausführungsform werden die Kabel, auch Leitungen genannt, in zumindest zwei Ebenen, d. h. nebeneinander oder übereinander gebündelt, angeordnet zugeführt, d. h. in zwei übereinander angeordneten Ebenen zugeführt. Auf der Abgangsseite verlaufen die Kabel bzw. Leitungen in einer Ebene, die sich insbesondere parallel zum Gehäuse des Stellantriebs erstreckt. Dadurch ergibt sich eine kompakte Bauweise für die Fixier- und Umlenkvorrichtung.

Nach einer weiteren bevorzugten Ausführungsform ist das Klemm- und Halteblech aus einem Blechstreifen zu einem U-förmig ausgebildeten Bügel gebogen, d. h. als einstückiges Blechteil ausgebildet. Damit ist eine einfache und kostengünstige Fertigung durch Blechumformung möglich.
Nach einer weiteren bevorzugten Ausführungsform weisen die Schenkel des Blechbügels nach innen, d. h. auf die Einlegeteile gerichtete Ausstanzungen mit einem Befestigungselement auf, welches als Lappen oder Zunge ausgebildet ist. Die Einlegeteile weisen dementsprechend Ausnehmungen oder Vertiefungen auf, in welche die Ausstanzungen formschlüssig eingreifen. Damit sind die Einlegeteile im Klemm- und Halteblech zumindest vorläufig fixiert.

Nach einer weiteren bevorzugten Ausführungsform sind an den freien Enden der U-Schenkel jeweils zwei Befestigungsbohrungen und auf der Abgangsseite der Einlegeteile jeweils zwei mit den Befestigungsbohrungen fluchtende Durchgangsbohrungen angeordnet. Damit können die montierten Einlegeteile über Befestigungsmittel formschlüssig mit dem Klemm- und Halteteil verbunden werden. Über diese Befestigungsschrauben wird gleichzeitig die erforderliche Verspannung der beiden Einlegeteile gegeneinander bewirkt.

Nach einer weiteren bevorzugten Ausführungsform ist im Scheitelbereich des Bügels ein Lappen mit einer weiteren Befestigungsbohrung ausgestanzt. Damit ist ein weiterer Befestigungspunkt für das Klemm- und Halteteil gegeben.

Nach einer weiteren bevorzugten Ausführungsform sind in die Durchgangsbohrungen der Einlegeteile Distanzbuchsen oder Gewindebuchsen einsetzbar. Damit geben sich unterschiedliche Befestigungs- und Verspannungsmöglichkeiten. Über die Distanzbuchsen werden ein definierter Abstand zwischen den Schenkeln des Bügels und damit eine definierte Verspannung der Einlegeteile eingehalten. Bei den Gewindebuchsen ergibt sich die Möglichkeit, die Schraubenköpfe auf der entgegengesetzten Seite anzuordnen.

Nach einer weiteren bevorzugten Ausführungsform ist das Klemm- und Halteblech einschließlich der beiden Einlegeteile und der eingespannten Kabel an drei Befestigungspunkten mittels drei Befestigungsschrauben im Fahrzeug fixierbar. Die Fixier- und Umlenkvorrichtung kann somit einfach im Fahrzeug fixiert und befestigt werden, wobei - wie oben erwähnt - die Möglichkeit der Demontage und einer nachträglichen Nachjustierung der Kabelposition möglich ist.
Nach einer weiteren bevorzugten Ausführungsform sind im Bereich der Führungsrillen auf der Zugangs- wie auf der Abgangsseite Pressrippen angeordnet, durch welche die Kabel leicht gequetscht und reibschlüssig gehalten werden. Dies dient der Zugentlastung, damit die Kabel bei Auftreten einer Zugbelastung nicht aus der Fixier- und Umlenkrichtung herausgezogen werden.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: einen elektromechanischen Stellantrieb mit Aktuator und Kabelanschluss,
- Fig. 2: eine Fixier- und Umlenkvorrichtung für Kabel des Stellantriebes,
- Fig. 3a: die Fixier- und Umlenkvorrichtung mit einer Umlenkung nach rechts (Abgang links),
- Fig. 3b: die Fixier- und Umlenkvorrichtung mit geradem Kabeldurchgang,
- Fig. 3c: die Fixier- und Umlenkvorrichtung mit einer Umlenkung nach links (Abgang rechts),
- Fig. 4: die Fixier- und Umlenkvorrichtung in perspektivischer Darstellung,
- Fig. 5a: eine Fixier- und Umlenkvorrichtung mit Distanzbuchsen,
- Fig. 5b: eine Fixier- und Umlenkvorrichtung mit Gewindebuchsen,
- Fig. 5c: eine weitere Ausbildung des Klemm- und Haltebleches,
- Fig. 6a bis 6c: verschiedene Fixier- und Umlenkvorrichtungen und ihr Abstand zum Aktuator.

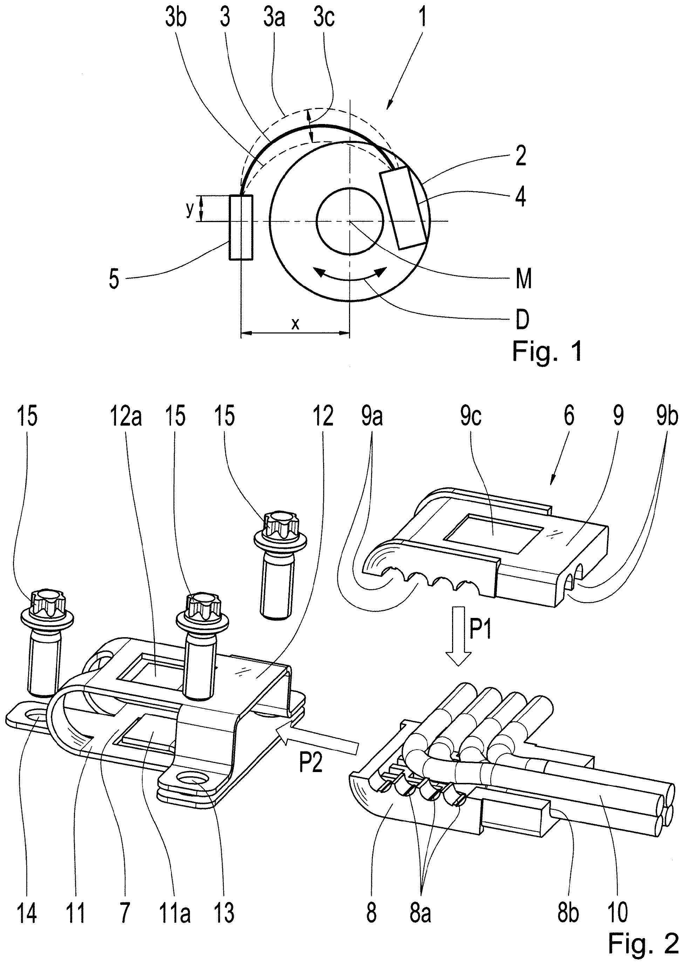

Fig. 1 zeigt in einer schematischen Darstellung einen elektromechanischen Stellantrieb 1 mit einem Stellmotor 2, auch Aktuator 2 genannt, welcher um seine Längsachse entsprechend dem Drehpfeil D drehbeweglich in einem Kraftfahrzeug (nicht dargestellt) angeordnet ist. Der Stellmotor 2 umfasst einen Elektromotor und ein untersetzendes Planetengetriebe und ist - was nicht dargestellt ist - an Stabilisatorhälften zur Wankstabilisierung angeschlossen. An den Elektromotor 2 ist ein Kabelstrang 3 über einen stirnseitig angeordneten Stecker 4 angeschlossen. Der Kabelstrang 3 erstreckt sich, ausgehend vom motorseitigen Stecker 4, in einem Bogen bis zu einem fahrzeugfesten Übergabepunkt 5, der in seiner Position durch die Koordinaten x, y in Bezug auf die Längsachse des Elektromotors 2, dargestellt durch den Mittelpunkt M, definiert ist. Vom Übergabepunkt 5 wird der Kabelstrang 3 im Fahrzeug weitergeführt (nicht dargestellt). Durch die Dreh- oder Schwenkbewegung entsprechend dem Drehpfeil D bewegt sich der Stecker 4 und damit das erste, motorfeste Ende des Kabelstranges 3 auf einem Kreisbogen um den Mittelpunkt M, während das zweite, fahrzeugseitige Ende des Kabelstranges 3 im Übergabepunkt 5 fixiert, d. h. ortfest angeordnet ist. Infolge dieser Relativbewegung ergibt sich eine Veränderung des Bogenverlaufes für den Kabelstrang 3, wobei der Kabelstrang 3 eine obere, durch die gestrichelte Linie 3a angedeutete oder eine untere, durch die gestrichelte Linie 3b angedeutete Endlage einnimmt. Dabei ergibt sich ein "Hub" 3c zwischen den beiden Endlagen 3a, 3b. Man bezeichnet dies als so genanntes Kabelatmen, wie es bereits in der eingangs genannten älteren Anmeldung, auf die hier verwiesen wird, beschrieben ist. Die ältere Anmeldung mit dem Aktenzeichen 10 2013 215 859.9 wird vollumfänglich in den Offenbarungsgehalt der vorliegenden Anmeldung einbezogen. Ersichtlich ist die Lage des Übergabepunktes 5 ist im Hinblick auf die Ausbildung des Bogens des Kabelstranges 3 von Bedeutung.

Fig. 2 zeigt eine Fixier- und Umlenkvorrichtung 6 in perspektivischer Darstellung und in ihre Einzelteile zerlegt. Die Fixier- und Umlenkvorrichtung 6, im Folgenden auch kurz Vorrichtung 6 genannt, wird am Übergabepunkt 5 (Fig. 1) positioniert und dientwie die Bezeichnung sagt - einerseits der Fixierung des Kabelstranges 3 (Fig. 1) und der Weiterführung oder Umlenkung der Kabel. Die Vorrichtung 6 umfasst ein Klemm- und Halteblech 7, ein erstes unteres Einlegeteil 8 und ein zweites oberes Einlegeteil 9, zwischen welchen vier Kabel 10 verlegt sind. Die Einlegeteile 8, 9 weisen jeweils Führungsrillen 8a, 8b, 9a, 9b auf, durch welche die Kabel 10 in Position gehalten werden. Die Kabel 10 sind aufgrund ihrer Anordnung im Kabelstrang 3 (Fig. 1) auf der Zugangsseite der Vorrichtung 6 in einer Reihe bzw. Ebene parallel nebeneinander angeordnet, werden um 90 Grad umgelenkt und sind auf der Abgangsseite in zwei Ebenen, d. h. zwei Kabel unten und zwei Kabel oben, d. h. gebündelt angeordnet. Das obere Einlegeteil 9 weist auf seiner Außenseite eine rechteckförmig ausgebildete Vertiefung 9c auf. Eine analoge Vertiefung ist auf der Unterseite (verdeckt) des unteren Einlegeteils 8 angeordnet. Für eine Zugentlastung der Kabel weisen die Einlegeteile 8, 9 auf der Zugangs- und Abgangsseite, d. h. im Bereich der Führungsrillen 8a, 8b, 9a, 9b Pressrippen (nicht dargestellt) auf, welche die Kabel 10 reibschlüssig in der Fixier- und Umlenkvorrichtung 6 halten.

Das Klemm- und Halteblech 7 ist aus einem Blechstreifen einstückig durch Umformung, insbesondere Stanzen und Biegen hergestellt. Das Klemm- und Halteblech 7, im Folgenden auch kurz Blech 7 genannt, ist U-förmig gebogen und weist zwei parallel zueinander angeordnete U-Schenkel 11, 12 auf. Die U-Schenkel 11, 12 weisen in ihren flachen Bereichen Austanzungen 11a, 12a in Form von Lappen oder Zungen auf, welche als formschlüssige Befestigungs- oder Fixierelemente in die Vertiefungen 9c der Einlegeteile 8, 9 eingreifen. Die U-Schenkel 11, 12 weisen an ihren freien Enden Laschen (zum Teil abgewinkelt) mit Befestigungsöffnungen 13 auf. Im Bereich des Bogens des Bleches 7 ist eine Lasche mit einer weiteren Befestigungsöffnung 14 ausgestanzt. Für die Befestigungsöffnungen 13, 14 (die dritte Öffnung ist hier verdeckt) sind Befestigungsschrauben 15 vorgesehen.

Zur Montage wird das obere Einlegeteil 9 entsprechend dem Pfeil P1 auf die Kabel 10 und das untere Einlegeteil 8 aufgesetzt. Beide Einlegeteile 8, 9 werden verspannt und anschließend entsprechend dem Pfeil P2 zwischen die U-Schenkel 11, 12, welche - entgegen der Darstellung in der Zeichnung - aufgebogen werden müssen, eingeschoben. Anschließend federn die U-Schenkel 11, 12 wieder zurück, sodass die Austanzungen 11a, 12a in die Vertiefungen 9c der Einlegeteile 8, 9 eingreifen können. Die Befestigung der Vorrichtung 6 am Fahrzeug erfolgt durch die Schrauben 15.

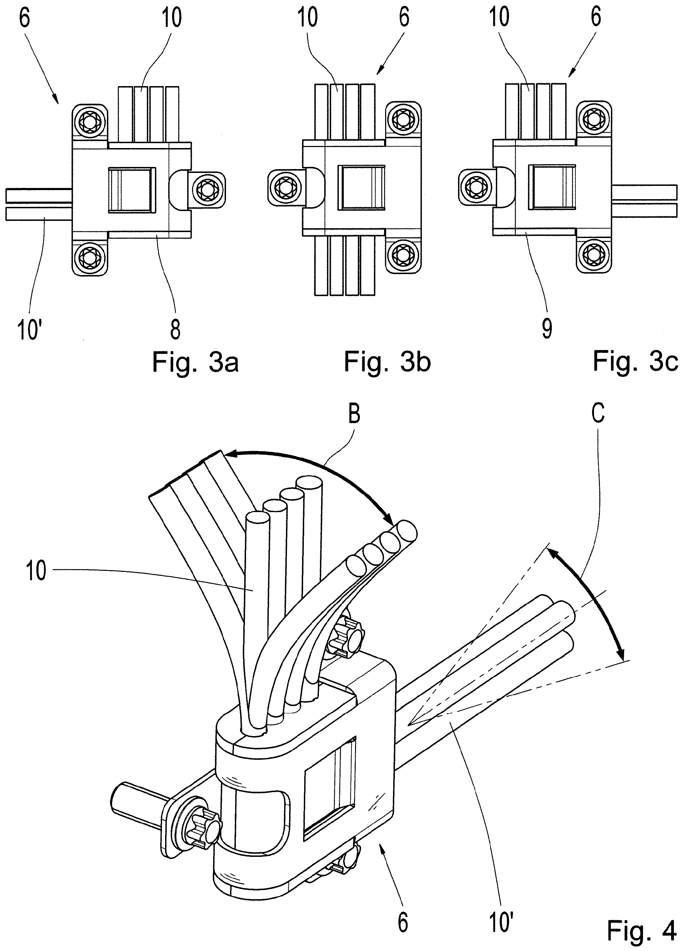

Die Figuren 3a, 3b und 3c zeigen drei Möglichkeiten der Kabelführung mit derselben Fixier- und Umlenkvorrichtung 6. In Fig. 3a werden der Vorrichtung 6 vier nebeneinander, d. h. in einer Ebene angeordnete Kabel 10 zugeführt, wobei die Kabel 10 dem zweiten Ende des dynamisch verlegten Kabelstranges 3 entsprechen. Ausgehend von der Zugangsseite der Vorrichtung 6, werden die Kabel 10 nach rechts umgelenkt, d. h. in der Zeichnung befindet sich der Abgang der in zwei Ebenen gebündelten Kabel 10' auf der linken Seite. In Fig. 3b werden die Kabel 10 gerade, d. h. ohne Richtungsänderung durch die Vorrichtung 6 hindurchgeführt. In Fig. 3c, welche spiegelbildlich zu Fig. 3a ist, erfolgt die Umlenkung der Kabel 10 nach links, d. h. der Abgang befindet sich in der Zeichnung rechts. Die Einlegeteile 8, 9 (vgl. Fig. 2) sind symmetrisch in ihren Außenabmessungen ausgebildet und können daher um 180 Grad gedreht oder gewendet werden, sodass - mit Bezug auf Fig. 2 - das obere Einlegeteil 9 unten und das untere Einlegeteil 8 oben zu liegen kommt. Fig. 3c entspricht bezüglich der Umlenkung Fig. 2, d. h. das Einlegeteil 9 liegt oben, was in Fig. 3c durch die Bezugsziffer 9 angedeutet ist. In Fig. 3a liegt das Einlegeteil 8 (in Fig. 2 das untere) oben.

Fig. 4 zeigt die Fixier- und Umlenkvorrichtung 6 in perspektivischer Darstellung mit vier in einer Ebene auf der Zugangsseite angeordneten Kabeln 10 und den als Bündel auf der Abgangsseite herausgeführten Kabeln 10'. Auf der Zugangsseite ist durch einen Bogenpfeil B der Spielraum, dargestellt als Winkel der Kabelbewegung, verdeutlicht. Wie erwähnt, entsprechen die vier nebeneinander angeordneten Kabel 10 dem Kabelstrang 3 gemäß Fig. 1. Im Kabelstrang 3 sind die Kabel in einer Ebene nebeneinander angeordnet, sodass alle Kabel den gleichen Biegeradius aufweisen - damit ergibt sich ein kontrollierter Verlauf der bogenförmigen Krümmung, insbesondere keine Verwindung des Kabelstranges. Nach der 90 Grad-Umlenkung in der Vorrichtung 6 gemäß Fig. 4 erfolgt dann die Bündelung der Kabel 10', womit ein Bauraumvorteil erreicht wird. Die Richtung der abgehenden, gebündelten Kabel 10' kann sich - wie durch den weiteren Bogenpfeil C angedeutet - ebenfalls ändern, obwohl das Kabelbündel statisch im Fahrzeug verlegt wird.

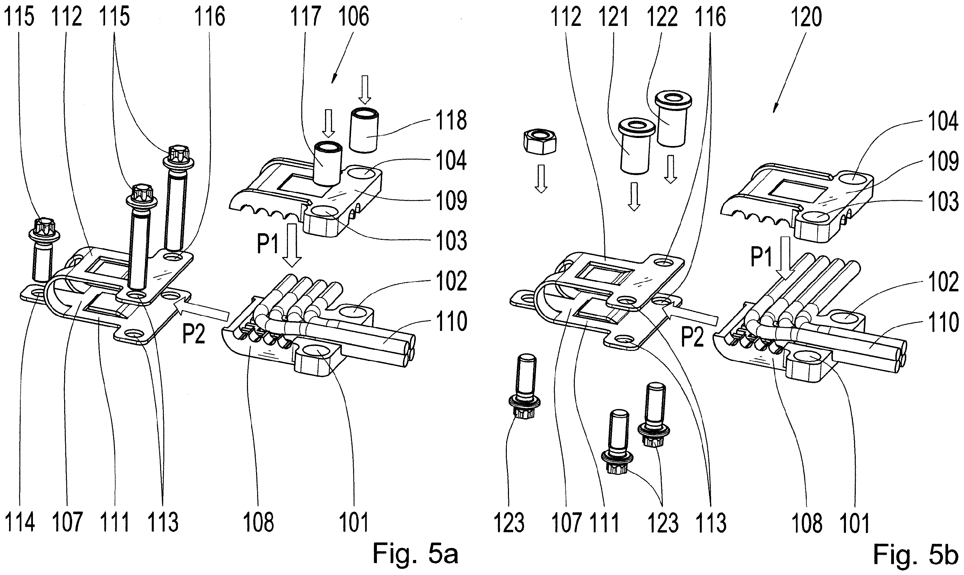

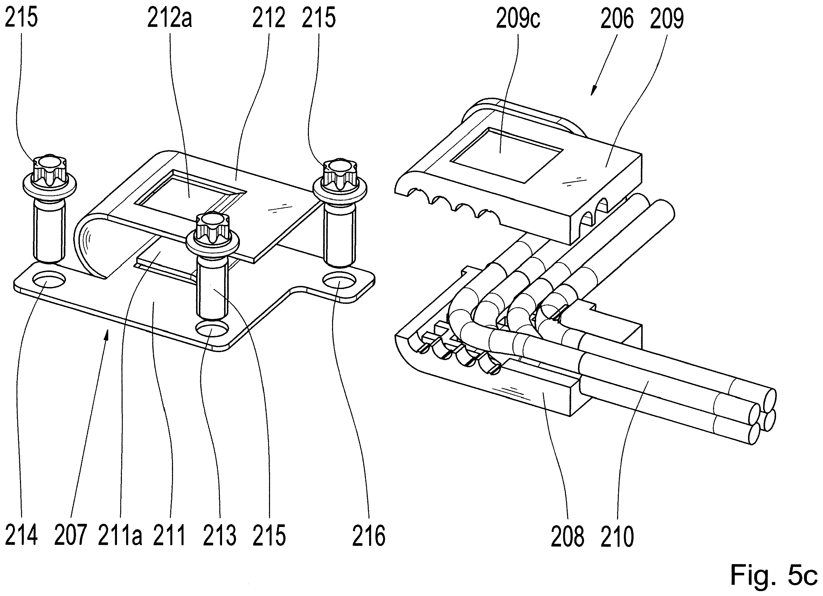

Figuren 5a, 5b, 5c zeigen weitere Ausführungsbeispiele der Erfindung, und zwar Abwandlungen der Fixier- und Umlenkvorrichtung 6, wie sie in Fig. 2 dargestellt ist. Fig. 5a zeigt eine Fixier- und Umlenkvorrichtung 106, wobei gleiche oder analoge Teile wie in Fig. 2 mit um 100 erhöhten Bezugszahlen bezeichnet sind. Das Klemm- und Halteblech 107 weist zwei parallel zueinander angeordnete U-Schenkel 111, 112 auf, welche an ihren freien Enden Befestigungsbohrungen 113, 116 aufweisen. Die Einlegeteile 108, 109 weisen jeweils seitlich des Kabelbündels 110 Durchgangsbohrungen 101, 102, 103, 104 auf, in welche Distanzbuchsen 117, 118 einsetzbar sind. Beide Einlegeteile 108, 109 werden - entsprechend dem Pfeil P1 - mit den Distanzbuchsen 117, 118 gefügt und anschließend mit eingelegten Kabeln110 - entsprechend dem Pfeil P2 - in das seitlich offene Klemm- und Halteblech 107 geschoben, bis die Befestigungsbohrungen 113, 116 mit den Bohrungen der Gewindebuchsen 117, 118 fluchten. Eine vorläufige Fixierung oder Arretierung ergibt sich durch die (in Fig. 5a nicht dargestellten) Ausstanzungen 12a in Verbindung mit der Vertiefung 9c, wie in Fig. 2 dargestellt. Die vormontierte Fixier- und Umlenkvorrichtung 106 kann dann im Fahrzeug am Übergabepunkt 5 (vgl. Fig. 1) unter Verwendung der Befestigungsschrauben 115 befestigt werden. Durch die Verwendung der Distanzbuchsen 117, 118 ergibt sich ein definierter Abstand zwischen den U-Schenkeln 111, 112, sodass eine unzulässige Pressung der Kabel 110 vermieden wird.

Fig. 5b zeigt eine weitere Fixier- und Umlenkvorrichtung 120, welche größtenteils die gleichen Teile wie das Ausführungsbeispiel gemäß Fig. 5a aufweist, die daher mit denselben Bezugszahlen versehen sind. Im Unterschied zum Ausführungsbeispiel gemäß Fig. 5a werden bei der Fixier- und Umlenkvorrichtung 120 Gewindebuchsen 121, 122 verwendet, welche an ihrer Oberseite jeweils einen Bund (ohne Bezugszahl) aufweisen. Die vormontierten Einlegeteile 108, 109 werden mit eingelegten Kabeln110 in das seitlich offene Klemm- und Halteblech 107 - entsprechend dem Pfeil P2 - eingeschoben, bis die Befestigungsbohrungen 101 bis 104 mit den Befestigungsbohrungen 113, 116 fluchten. Danach werden die Gewindebuchsen 121, 122 durchgesteckt, und von der Unterseite her werden Befestigungsschrauben 123 in die Gewindebuchsen 121, 122 eingeschraubt. Die Gewindebuchsen 121, 122 wirken gleichzeitig als Distanzbuchsen zwischen den U-Schenkeln 111, 112, sodass die Pressung auf die beiden Kunststoff-Einlegeteile 108, 109 definiert ist.

Fig. 5c zeigt ein weiteres Ausführungsbeispiel für eine Fixier- und Umlenkvorrichtung 206, wobei gleiche oder analoge Teile mit um 200 erhöhten Bezugszahlen bezeichnet sind. Das Klemm- und Halteblech 207 ist U-förmig gebogen und weist zwei parallel zueinander angeordnete U-Schenkel 211, 212 auf, wobei lediglich in dem unteren U-Schenkel 211 Befestigungsbohrungen 213, 214, 216 angeordnet sind. Die beiden U-Schenkel 211, 212 weisen eine elastische Eigenspannung auf und wirken wie ein clip oder eine federnde Klammer (dies gilt analog auch für das Klemm- und Halteblech 107 in Fig. 5a, 5b). Für die Fixierung der Vorrichtung 206 im Fahrzeug sind Befestigungsschrauben 215 vorgesehen. Beide U-Schenkel 211, 212 weisen analog dem Ausführungsbeispiel gemäß Fig. 2 Ausstanzungen 211a, 212a auf, welche der Fixierung der beiden Einlegeteile 208, 209 dienen. Im Unterschied zu den Ausführungsbeispielen gemäß Fig. 5a, 5b weisen die Einlegeteile 208, 209 keine Durchgangsbohrungen auf, vielmehr erfolgt die Fixierung der beiden Einlegeteile 208, 209 im Klemm- und Halteblech 207 durch die Ausstanzungen 211a, 212a in Verbindung mit den Vertiefungen 209c, wodurch eine Schnapp- oder Rastverbindung hergestellt wird. In diesem vorfixierten Zustand kann die Vorrichtung 206 im Fahrzeug befestigt werden.

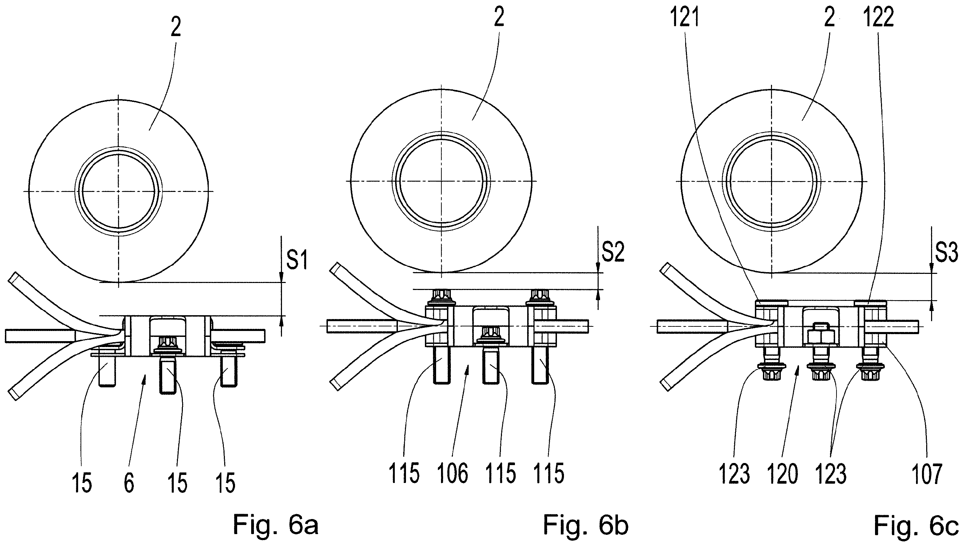

Figuren 6a, 6b und 6c zeigen einen Vergleich der verschiedenen Ausführungsformen für einen Kabelübergabepunkt im Hinblick auf deren Abstände S1, S2, S3 zum Aktuator 2, wie er in Fig. 1 dargestellt ist. Fig. 6a zeigt das Ausführungsbeispiel gemäß Fig. 2, wobei die Schraubenköpfe der Befestigungsschrauben 15 unterhalb der Oberkante des oberen U-Schenkels 12a liegen. Es ergibt sich daher - im Vergleich zu den anderen Lösungen - ein maximaler Abstand S1 zum Umfang des Aktuators 2.

Fig. 6b zeigt den Abstand S2 für die Fixier- und Umlenkvorrichtung 106 gemäß Fig. 5a. Die Schraubenköpfe der Befestigungsschrauben 115 ragen über das Klemm- und Halteblech 107 hinaus und verringern somit den Abstand zum Aktuator 2. Ersichtlich ist S2 kleiner S1 (Fig. 6a).

Fig. 6c zeigt die Fixier- und Umlenkvorrichtung 120 gemäß Fig. 5b und ihren Abstand S3 zum Aktuator 2. Die Schraubenköpfe der Befestigungsschrauben 123 befinden sich zwar an der Unterseite des Klemm- und Halteblechs 107, allerdings ergibt sich durch den Bund der Gewindebuchsen 121, 122 ein reduzierter Abstand S3 im Vergleich zu S1.

Insgesamt gilt für die Figuren 6a, 6b, 6c: S1 > S3 > S2, wobei der größte Abstand S1 der vorteilhafteste ist.

### Bezuqszeichen

- 1: Stellantrieb
- 2: Stellmotor
- 3: Kabelstrang
- 3a: obere Endlage
- 3b: untere Endlage
- 3c: Hub
- 4: Stecker
- 5: Übergabepunkt
- 6: Fixier- und Umlenkvorrichtung
- 7: Klemm- und Halteblech
- 8: erstes Einlegeteil
- 8a: Führungsrillen
- 8b: Führungsrillen
- 9: Zweites Einlegeteil
- 9a: Führungsrillen
- 9b: Führungsrillen
- 9c: Vertiefung
- 10: Kabel
- 10': Kabel (abgehend)
- 11: U-Schenkel
- 11a: Ausstanzung
- 12: U-Schenkel
- 12a: Ausstanzung
- 13: Befestigungsöffnung
- 14: Befestigungsöffnung
- 15: Befestigungsschraube

- 101: Befestigungsbohrung
- 102: Befestigungsbohrung
- 103: Befestigungsbohrung
- 104: Befestigungsbohrung
- 106: Fixier- und Umlenkvorrichtung
- 107: Klemm- und Halteblech
- 108: erstes Einlegeteil
- 109: zweites Einlegeteil
- 110: Kabel
- 111: U-Schenkel
- 112: U-Schenkel
- 113: Befestigungsbohrungen
- 114: Befestigungsbohrung
- 115: Befestigungsschraube
- 116: Befestigungsbohrungen
- 117: Distanzbuchse
- 118: Distanzbuchse

- 120: Fixier- und Umlenkvorrichtung
- 121: Gewindebuchse
- 122: Gewindebuchse
- 123: Befestigungsschraube

- 206: Fixier- und Umlenkvorrichtung
- 207: Klemm- und Halteblech
- 208: erstes Einlegeteil
- 209: zweites Einlegeteil
- 209c: Vertiefung
- 210: Kabel
- 211: U-Schenkel
- 211a: Ausstanzung
- 212: U-Schenkel
- 212a: Ausstanzung
- 213: Befestigungsbohrung
- 214: Befestigungsbohrung
- 215: Befestigungsschraube
- 216: Befestigungsbohrung
- B: Doppelpfeil
- C: Doppelpfeil
- D: Drehpfeil
- M: Mittelpunkt (Längsachse)
- P1: Fügerichtung
- P2: Montagerichtung
- S1: Abstand
- S2: Abstand
- S3: Abstand
- x, y: Koordinaten

## Patentansprüche

1. Elektromechanischer Stellantrieb, umfassend einen um seine Längsachse drehbeweglich in einem Fahrzeug anordenbaren Stellmotor (2) und einen ein erstes und ein zweites Ende aufweisenden Kabelstrang (3), welcher an seinem ersten Ende am Stellmotor (2) angeschlossen, sich in einem biegeelastisch verformbaren Bogen von seinem ersten bis zu seinem zweiten Ende erstreckt und an seinem zweiten Ende ortsfest im Fahrzeug fixierbar ist, wobei das zweite Ende des Kabelstranges (3) in einer Fixier- und Umlenkvorrichtung (6, 106, 120, 206) eingespannt ist, wobei die Fixier- und Umlenkvorrichtung (6, 106, 120, 206) ein erstes und ein zweites Einlegeteil (8, 9; 108, 109; 208, 209) umfasst.

2. Elektromechanischer Stellantrieb nach Anspruch 1, **dadurch gekennzeichnet, dass** die Fixier- und Umlenkvorrichtung (6, 106, 120, 206) ein Klemm- und Halteblech (7, 107, 207) zur Aufnahme der beiden Einlegeteile (8, 9; 108, 109; 208, 209) umfasst.

3. Elektromechanischer Stellantrieb nach Anspruch 2, **dadurch gekennzeichnet, dass** das Klemm- und Halteblech (7, 107, 207) Befestigungsmittel (13, 14; 113, 114, 116; 213, 214, 216) zur fahrzeugseitigen Fixierung aufweist, wobei die Befestigungsmittel als Laschen mit Befestigungsöffnungen (13, 14; 113, 114, 116; 213, 214, 216) ausgebildet sind.

4. Elektromechanischer Stellantrieb nach einem der vorigen Ansprüche, **dadurch gekennzeichnet, dass** der Kabelstrang (3) einzelne Kabel (10, 110, 210) umfasst und dass die Kabel (10, 110, 210) zwischen den Einlegeteilen (8, 9; 108, 109; 208, 209) verlegt sind, wobei insbesondere die Einlegeteile (8, 9) Führungsrillen (8a, 8b, 9a, 9b) zur Aufnahme und Umlenkung der Kabel (10) aufweisen.

5. Elektromechanischer Stellantrieb nach einem der vorigen Ansprüche, **dadurch gekennzeichnet, dass** die Fixier- und Umlenkvorrichtung (6, 106, 120, 206) eine Zugangsseite und zwei Abgangsseiten für die Kabel (10, 110, 210) aufweist.

6. Elektromechanischer Stellantrieb nach Anspruch 5, **dadurch gekennzeichnet, dass** die Kabel (10, 110, 210) auf der Zugangsseite in zumindest zwei Ebenen und auf der, insbesondere abgewinkelten, Abgangsseite in einer Ebene angeordnet sind.

7. Elektromechanischer Stellantrieb nach Anspruch 5 oder 6, **dadurch gekennzeichnet, dass** der Umlenkwinkel zwischen der Richtung der zugehenden Kabel (10) und der Richtung der abgehenden Kabel (10') ungefähr 90 Grad, bevorzugt genau 90 Grad, beträgt.

8. Elektromechanischer Stellantrieb nach einem der Ansprüche 4 bis 7, **dadurch gekennzeichnet, dass** das Klemm- und Halteblech (7, 107, 207) aus einem Blech U-förmig zu einem Bügel mit zwei parallelen U-Schenkeln (11, 12; 111, 112; 211, 212) gebogen ist.

9. Elektromechanischer Stellantrieb nach Anspruch 8, **dadurch gekennzeichnet, dass** die U-Schenkel (11, 12; 111, 112; 211, 212) jeweils eine nach innen gerichtete Ausstanzung (11a, 12a; 111a, 112a; 211a, 212a) mit einem Befestigungselement aufweisen, welches in eine Ausnehmung (9c) in den Einlegeteilen (8, 9; 209 c) eingreift.

10. Elektromechanischer Stellantrieb nach Anspruch 8 oder 9, **dadurch gekennzeichnet, dass** an den Enden der U-Schenkel (111, 112) jeweils Befestigungsbohrungen (113, 116) und in den Einlegeteilen (108, 109) jeweils zwei mit dem Befestigungsbohrungen (113, 116) fluchtende Durchgangsbohrungen (101, 102, 103, 104) angeordnet sind.

11. Elektromechanischer Stellantrieb nach Anspruch 8, 9 oder 10, **dadurch gekennzeichnet, dass** im Scheitelbereich des Bügels (7, 107, 207) ein Lappen mit einer weiteren Befestigungsbohrung (14, 114, 214) ausgestanzt ist.

12. Elektromechanischer Stellantrieb nach Anspruch 10, **dadurch gekennzeichnet, dass** in die Durchgangsbohrungen (101, 102, 103, 104) Distanzbuchsen (17, 118) oder Gewindebuchsen (121, 122) einsetzbar sind.

13. Elektromechanischer Stellantrieb nach Anspruch 10, 11 oder 12, **dadurch gekennzeichnet, dass** das Klemm- und Halteblech (7, 107, 207) mit Einlegeteilen (8, 9; 108, 109; 208, 209) und eingelegten Kabeln (10; 110) mittels drei Befestigungsschrauben (15; 115, 123; 215) im Fahrzeug fixierbar sind.

14. Elektromechanischer Stellantrieb nach einem der Ansprüche 5 bis 13, **dadurch gekennzeichnet, dass** im Bereich der Führungsrillen (8a, 8b, 9a, 9b) der Zugangs- und der Abgangsseite Pressrippen angeordnet sind.

## Claims

1. Electromechanical actuating drive, comprising an actuating motor (2) which can be arranged in a vehicle such that it can be moved rotationally about its longitudinal axis, and a wiring harness (3) which has a first and a second end, is connected at its first end to the actuating motor (2), extends in a resiliently flexibly deformable arc from its first as far as its second end, and can be fixed at its second end in the vehicle in a stationary manner, the second end of the wiring harness (3) being clamped in a fixing and deflecting apparatus (6, 106, 120, 206), the fixing and deflecting apparatus (6, 106, 120, 206) comprising a first and a second insert part (8, 9; 108, 109; 208, 209) .

2. Electromechanical actuating drive according to Claim 1, **characterized in that** the fixing and deflecting apparatus (6, 106, 120, 206) comprises a clamping and holding plate (7, 107, 207) for receiving the two insert parts (8, 9; 108, 109; 208, 209).

3. Electromechanical actuating drive according to Claim 2, **characterized in that** the clamping and holding plate (7, 107, 207) has fastening means (13, 14; 113, 114, 116; 213, 214, 216) for vehicle-side fixing, the fastening means being configured as brackets with fastening openings (13, 14; 113, 114, 116; 213, 214, 216) .

4. Electromechanical actuating drive according to one of the preceding claims, **characterized in that** the wiring harness (3) comprises individual cables (10, 110, 210), and **in that** the cables (10, 110, 210) are laid between the insert parts (8, 9; 108, 109; 208, 209), the insert parts (8, 9) having, in particular, guide grooves (8a, 8b, 9a, 9b) for receiving and deflecting the cables (10).

5. Electromechanical actuating drive according to one of the preceding claims, **characterized in that** the fixing and deflecting apparatus (6, 106, 120, 206) has an inlet side and two outlet sides for the cables (10, 110, 210).

6. Electromechanical actuating drive according to Claim 5, **characterized in that** the cables (10, 110, 210) are arranged in at least two planes on the inlet side and in one plane on the outlet side which is, in particular, angled away.

7. Electromechanical actuating drive according to Claim 5 or 6, **characterized in that** the deflecting angle between the direction of the incoming cables (10) and the direction of the outgoing cables (10') is approximately 90 degrees, preferably precisely 90 degrees.

8. Electromechanical actuating drive according to one of Claims 4 to 7, **characterized in that** the clamping and holding plate (7, 107, 207) is bent in a U-shaped manner from a metal sheet to form a hoop with two parallel U-limbs (11, 12; 111, 112; 211, 212).

9. Electromechanical actuating drive according to Claim 8, **characterized in that** the U-limbs (11, 12; 111, 112; 211, 212) in each case have an inwardly directed stamped-out portion (11a, 12a; 111a, 112a; 211a, 212a) with a fastening element which engages into a recess (9c) in the insert parts (8, 9; 209c).

10. Electromechanical actuating drive according to Claim 8 or 9, **characterized in that** fastening bores (113, 116) are arranged in each case at the ends of the U-limbs (111, 112), and in each case two through bores (101, 102, 103, 104) which are aligned with the fastening bores (113, 116) are arranged in the insert parts (108, 109).

11. Electromechanical actuating drive according to Claim 8, 9 or 10, **characterized in that** a tab with a further fastening bore (14, 114, 214) is stamped out in the crest region of the hoop (7, 107, 207).

12. Electromechanical actuating drive according to Claim 10, **characterized in that** spacer sleeves (17, 118) or threaded bushes (121, 122) can be inserted into the through bores (101, 102, 103, 104).

13. Electromechanical actuating drive according to Claim 10, 11 or 12, **characterized in that** the clamping and holding plate (7, 107, 207) with insert parts (8, 9; 108, 109; 208, 209) and inserted cables (10; 110) can be fixed in the vehicle by means of three fastening screws (15; 115, 123; 215).

14. Electromechanical actuating drive according to one of Claims 5 to 13, **characterized in that** pressure ribs are arranged in the region of the guide grooves (8a, 8b, 9a, 9b) of the inlet side and the outlet side.

## Revendications

1. Actionneur électromécanique, comprenant un servomoteur (2), mobile en rotation autour de son axe longitudinal et pouvant être installé dans un véhicule, et un faisceau de câbles (3) possédant une première et une deuxième extrémité, lequel est raccordé au servomoteur (2) par sa première extrémité, s'étend en un arc déformable par élasticité en flexion de sa première jusqu'à sa deuxième extrémité et peut être fixé en position fixe dans le véhicule par sa deuxième extrémité, la deuxième extrémité du faisceau de câbles (3) étant serrée dans un dispositif de fixation et de renvoi (6, 106, 120, 206), le dispositif de fixation et de renvoi (6, 106, 120, 206) possédant une première et une deuxième partie d'insertion (8, 9 ; 108, 109 ; 208, 209) .

2. Actionneur électromécanique selon la revendication 1, **caractérisé en ce que** le dispositif de fixation et de renvoi (6, 106, 120, 206) comporte une tôle de blocage et de maintien (7, 107, 207) destinée à accueillir les deux parties d'insertion (8, 9 ; 108, 109 ; 208, 209).

3. Actionneur électromécanique selon la revendication 2, **caractérisé en ce que** la tôle de blocage et de maintien (7, 107, 207) possède des moyens de fixation (13, 14 ; 113, 114, 116 ; 213, 214, 216) servant à la fixation côté véhicule, les moyens de fixation étant réalisés sous la forme de pattes munies d'ouvertures de fixation (13, 114 ; 113, 14, 116 ; 213, 214, 216).

4. Actionneur électromécanique selon l'une des revendications précédentes, **caractérisé en ce que** le faisceau de câbles (3) comporte des câbles (10, 110, 210) individuels et **en ce que** les câbles (10, 110, 210) sont posés entre les parties d'insertion (8, 9 ; 108, 109 ; 208, 209), les parties d'insertion (8, 9) possédant notamment des rainures de guidage (8a, 8b, 9a, 9b) servant à accueillir et à renvoyer les câbles (10) .

5. Actionneur électromécanique selon l'une des revendications précédentes, **caractérisé en ce que** le dispositif de fixation et de renvoi (6, 106, 120, 206) possède un côté d'arrivée et deux côtés de départ pour les câbles (10, 110, 210).

6. Actionneur électromécanique selon la revendication 5, **caractérisé en ce que** les câbles (10, 110, 210) sur le côté d'arrivée sont disposés dans au moins deux plans et, sur le côté de départ, notamment coudé dans un plan.

7. Actionneur électromécanique selon la revendication 5 ou 6, **caractérisé en ce que** l'angle de renvoi entre la direction du câble arrivant (10) et la direction du câble partant (10') est d'environ 90 degrés, de préférence exactement égal à 90 degrés.

8. Actionneur électromécanique selon l'une des revendications 4 à 7, **caractérisé en ce que** la tôle de blocage et de maintien (7, 107, 207) est cintrée en forme de U à partir d'une tôle en un étrier ayant deux branches de U (11, 12 ; 111, 112 ; 211, 212) parallèles.

9. Actionneur électromécanique selon la revendication 8, **caractérisé en ce que** les branches de U (11, 12 ; 111, 112 ; 211, 212) possèdent respectivement un poinçonnage (11a, 12a ; 111a, 112a ; 211a, 212a) orienté vers l'intérieur et pourvu d'un élément de fixation qui vient en prise dans un creux (9c) dans les parties d'insertion (8, 9 ; 209c).

10. Actionneur électromécanique selon la revendication 8 ou 9, **caractérisé en ce qu'**aux extrémités des branches de U (111, 112) se trouvent respectivement des perçages de fixation (113, 116) et dans les parties d'insertion (108, 109) respectivement deux perçages traversants (101, 102, 103, 104) dans l'alignement des perçages de fixation (113, 116).

11. Actionneur électromécanique selon la revendication 8, 9 ou 10, **caractérisé en ce qu'**une languette munie d'un perçage de fixation (14, 114, 214) supplémentaire est poinçonnée dans la zone du sommet de l'étrier (7, 107, 207) .

12. Actionneur électromécanique selon la revendication 10, **caractérisé en ce que** des douilles d'espacement (17, 118) ou des douilles filetées (121, 122) peuvent être insérées dans les perçages traversants (101, 102, 103, 104).

13. Actionneur électromécanique selon la revendication 10, 11 ou 12, **caractérisé en ce que** la tôle de blocage et de maintien (7, 107, 207) avec les parties d'insertion (8, 9 ; 108, 109 ; 208, 209) et les câbles insérés (10 ; 110) peut être fixée dans le véhicule au moyen de trois vis de fixation (15 ; 115, 123 ; 215).

14. Actionneur électromécanique selon l'une des revendications 5 à 13, **caractérisé en ce que** des nervures de pressage sont disposées dans la zone des rainures de guidage (8a, 8b, 9a, 9b) du côté d'arrivée et du côté de départ.
